# FASCICULE DE BREVET EUROPEEN

(11) **EP 1 044 870 B1**
(45) Date de publication et mention de la délivrance du brevet: **13.08.2003**
(21) Numéro de dépôt: 00400985.8
(22) Date de dépôt: 10.04.2000
(51) Int. Cl.: B62D 55/088

(54) **Perfectionnement aux roues pour chenilles**
Verbessertes Antriebsrad für Gummigleiskette
Improved drive wheel for rubber crawler

(30) Priorité: 15.04.1999 FR 9904741
(43) Date de publication de la demande: 18.10.2000
(73) Titulaire: Otico, 77650 Longueville (FR)
(72) Inventeur: Phely, Olivier, 77650 Sainte Colombe (FR)
(74) Mandataire: Bezault, Jean

(56) Documents cités:
- EP-A- 0 512 467
- EP-A- 0 831 017

## Description

L'invention concerne les entraînements à chenille, destinés notamment à la propulsion de véhicules tout terrain, tels que des engins agricoles, viticoles et ostréicoles ou des engins de travaux publics et forestiers.

Dans son brevet FR-A-2 711 959 (93 13 211), la Demanderesse a proposé des aménagements particulièrement avantageux des entraînements à chenilles. Une idée essentielle consiste à prévoir comme chenille une bande souple sans fin, de préférence en matériau élastomère renforcé. La chenille est munie intérieurement d'au moins une rangée de plots, situés dans le sens de la longueur de la bande, distants entre eux d'un pas constant, et délimités chacun par deux faces transversales, formant un angle compris entre 30 et 40° par rapport à un plan normal à la bande de la chenille, ainsi qu'une roue motrice sur laquelle s'enroule la chenille, et munie de moyens d'entraînement propres à coopérer avec les plots.

Ainsi, une roue d'entraînement comporte, généralement au voisinage de son plan médian, perpendiculaire à son axe de rotation, une zone d'entraînement formant engrenage d'entraînement desdits plots, avec de part et d'autre des zones d'appui roulant de la chenille, zones que l'on nomme pistes de roulement. Il en est de même pour certaines au moins des roues folles qui coopèrent avec la chenille, hormis bien entendu la fonction d'engrenage d'entraînement. Les pistes de roulement jouent un rôle significatif dans le maintien de la chenille, et, le cas échéant, sur son entraînement.

Un problème se pose lorsque des pierres, morceaux de bois, du sable, du gravier, ou d'autres corps étrangers semblables viennent à s'introduire entre la chenille et une roue, en particulier mais non exclusivement une roue d'entraînement. En effet, il peut en découler une "surtension" mécanique importante de la chenille, avec aussi des effets tendant à poinçonner la chenille et à abîmer sa structure.

Ces effets sont assez mal connus, et dépendent de la forme et du nombre des corps étrangers ainsi introduits à un moment donné pour une chenille donnée, de leurs caractéristiques mécaniques, ainsi que de leur répartition positionnelle.

La Demanderesse a utilisé des grattoirs de roue pour limiter le nombre de corps étrangers ainsi présents. Mais cette solution n'a pas donné entière satisfaction.

Par ailleurs,le document EP-A-0831017, qui montre le préambule de la revendication 1, décrit une roue pour chenille,dont chacune des pistes de roulement est formée par une multiplicité d'éléments d'entraînement montés en porte-à-faux définissant des fentes, deux à deux, en sorte que chacune des pistes de roulement présente ainsi une forme dentelée. Cette configuration tend à évacuer les corps étrangers en direction radiale.

La présente invention vient améliorer la situation.

L'invention part d'une roue pour chenille souple, comprenant deux pistes de roulement, encadrant une piste d'entraînement.

Selon un aspect général de l'invention, une piste de roulement comporte une multiplicité de cavités de forme choisie, s'étendant jusqu'au bord de la roue et débouchant radialement vers l'extérieur de la roue et latéralement vers le bord de la roue, de manière à favoriser une évacuation latérale de tout matériau ou objet susceptible de se loger entre la roue et la chenille.

La Demanderesse a en effet constaté qu'il est possible, et même favorable, de réduire ainsi la surface active des zones de roulement, en y prévoyant des cavités qui, en combinaison avec le mouvement de la roue, permettent de limiter considérablement l'accumulation de corps étrangers entre roue et chenille. Le maintien de la chenille et sa douceur de roulement ne sont pas altérés d'une manière sensible.

En règle générale, les pistes de roulement sont de forme cylindrique circulaire. Les cavités forment des évidements espacés angulairement, de préférence de manière régulière, au moins statistiquement.

Dans un mode de réalisation, les pistes de roulement sont définies par des flasques de part et d'autre de l'âme de la roue (plan central). Les cavités sont ménagées dans la face externe de ces flasques.

D'autres caractéristiques et avantages de l'invention pourront apparaître à l'examen de la description qui suit, donnée à titre d'exemple, ainsi que des dessins annexés, sur lesquels :
- la figure 1 est une vue partielle en coupe de côté d'un dispositif d'entraînement de chenille souple;
- les figures 2 et 3 illustrent, en perspective et coupe périphérique partielles, un premier mode de réalisation d'une roue selon l'invention;
- les figures 4 et 5 illustrent, en perspective et coupe périphérique partielles, un second mode de réalisation d'une roue selon l'invention;
- les figures 6 et 7 illustrent, en perspective et coupe périphérique partielles, un troisième mode de réalisation d'une roue selon l'invention;
- la figure 8 illustre, en perspective périphérique partielle, un quatrième mode de réalisation d'une roue selon l'invention; et
- la figure 9 illustre, en perspective périphérique partielle, un cinquième mode de réalisation d'une roue selon l'invention.

Pour la description des entraînements à chenille et du véhicule, il est fait référence au Brevet français précité.

Compte-tenu de la nature de l'invention, il est clair également que les dessins pourront contribuer à la compréhension de l'invention, le cas échéant.

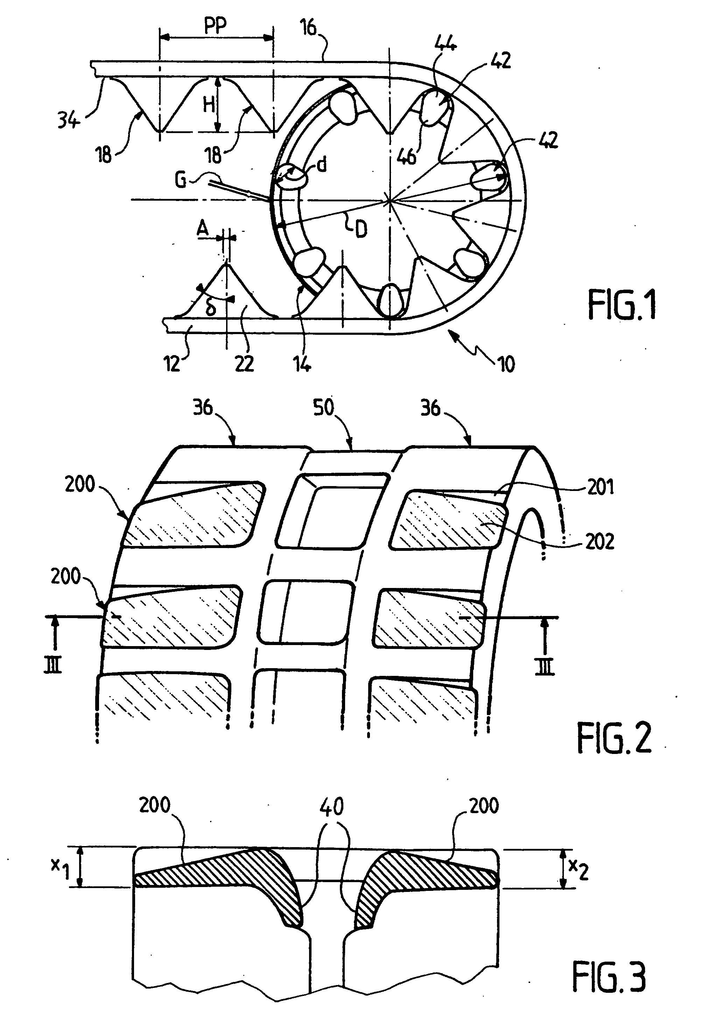

La figure 1 représente un dispositif d'entraînement d'une chenille souple 10 s'enroulant autour d'une roue motrice 14. La chenille 10 est formée d'une bande souple sans fin 12 réalisée avantageusement en matériau élastomère, par exemple à base de caoutchouc naturel, renforcée intérieurement par des armatures non représentées, et obtenues, de façon en soi connue, par la superposition de nappes de matériau à chaîne et à trame comportant des fils métalliques ou synthétiques. La bande sans fin 12 comporte extérieurement une surface de roulement 16. Elle est munie intérieurement d'une rangée de plots 18 situés dans le sens de la longueur de la bande et en principe équidistants.

Dans la forme de réalisation décrite, la rangée de plots 18 est située entre deux pistes de roulement en forme de coussin, formées en surépaisseur à l'intérieur de la bande sans fin 12.

La roue motrice 14 est en principe réalisée en une matière métallique, avantageusement en fonte ou en aluminium. Elle comporte elle aussi deux surfaces ou pistes de roulement annulaires 36 propres à recevoir respectivement les deux pistes de roulement 34 (Figure 1). Ces deux surfaces de roulement 36 font par exemple partie de deux jantes symétriques, et elles comportent chacune un prolongement 40 s'étendant radialement vers l'intérieur de la roue (Figure 3). Les prolongements 40 sont parallèles aux faces latérales 22 des plots et délimitent avec ces dernières un jeu latéral moyen de valeur limitée, qui est avantageusement compris entre 4 et 8 millimètres.

Les deux jantes 38 sont réunies entre elles, à intervalles réguliers, par des taquets d'entraînement 42, qui définissent une "âme" de la roue, dans son plan de symétrie central perpendiculaire à l'axe de rotation. Ces taquets sont disposés parallèlement entre eux à la périphérie de la roue et parallèlement aux génératrices de cette dernière. Ils sont distants entre eux, au niveau de la périphérie de la roue motrice 14, d'un pas circonférentiel dont la valeur est comprise entre 93% et 100% de la valeur PP du pas des plots 18, qui sont de hauteur H. Comme on le voit sur la figure 1, chacun des taquets a une section de forme générale ovoïde avec une extrémité renflée 44, de plus grande section, dirigée vers l'extérieur et une extrémité amincie 46, de plus petite section, dirigée vers l'intérieur de la roue. L'extrémité rentrée 44 a un diamètre d d'au moins 25 millimètres (figure 1). Et les taquets 42 sont destinés à venir s'engrener dans les espaces vides délimités entre les plots 18. Leur forme amincie vers l'intérieur facilite l'engagement et le dégagement des plots lors de l'engrènement ou du désengrènement de ceux-ci avec la roue motrice.

Le diamètre extérieur de la roue 14 est désigné par D. Dans une gamme inférieure, on a H = 50 à 70 millimètres, D minimal = 250 à 300 millimètres et PP = 110 à 135 millimètres. Dans une gamme supérieure, on a H = 70 à 90 millimètres, D minimal = 300 à 550 millimètres et PP = 120 à 155 millimètres.

Au niveau des taquets 42, la roue comporte donc une zone intermédiaire 50, qui sert ou non d'entraînement, suivant qu'il s'agit d'une roue motrice ou folle.

Les taquets 42 sont disposés en retrait vers l'intérieur de la roue par rapport aux surfaces de roulement 36. Ce retrait qui, à titre d'exemple, peut être de l'ordre de 2 millimètres, a été prévu pour faciliter notamment le dégagement des matériaux (terre, cailloux, paille, etc.) qui se placent entre la chenille et la roue motrice.

Mais, comme indiqué plus haut, il s'est avéré que cette mesure n'était pas toujours suffisante. L'ajout de grattoirs, par exemple comme indiqué schématiquement en G, n'est pas suffisant non plus.

La Demanderesse a alors constaté que la prévision de cavités, convenablement conformées, améliore considérablement les choses, sans dégrader les propriétés mécaniques de la roue (d'entraînement ou folle). En principe, ces cavités sont pentues radialement vers l'intérieur de la roue, lorsqu'on va vers une face latérale externe de la roue.

On a vu que les pistes de roulement de la roue sont de forme cylindrique circulaire. On décrira d'abord des modes de réalisation où les cavités sont formées par des évidements espacés angulairement. Plus précisément, les cavités sont délimitées chacune par une paroi de fond inclinée en direction du bord de la roue.

Sur les figures 2 et 3, les cavités 200 ont un contour sensiblement rectangulaire, vu de la piste de roulement. Leurs bords limites 201 sont sensiblement radiaux. Comme le montre la vue en coupe III-III de la figure 3, le fond 202 descend radialement lorsqu'on va vers l'extérieur de la roue. Autrement dit, la périphérie de la jante est amincie progressivement vers l'extérieur au niveau des cavités 200.

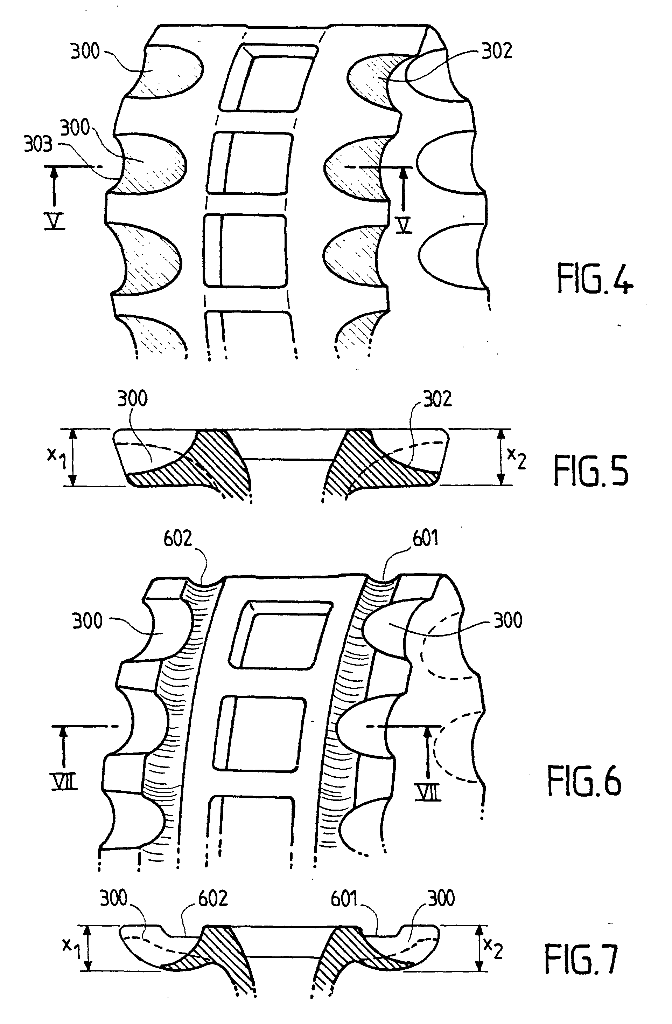

Sur les figures 4 et 5 (coupe V-V), les cavités 300 ont une forme en coquille (de coquillage), si l'on préfère "ongulée" en creux. Comme précédemment, le fond 302 descend radialement lorsqu'on va vers l'extérieur de la roue, la périphérie de la jante étant amincie progressivement vers l'extérieur au niveau des cavités 300. On note la forme arquée 303 en "lunule" du bord libre de la cavité, qui, par ailleurs, a ici une pente plus prononcée, au moins partiellement.

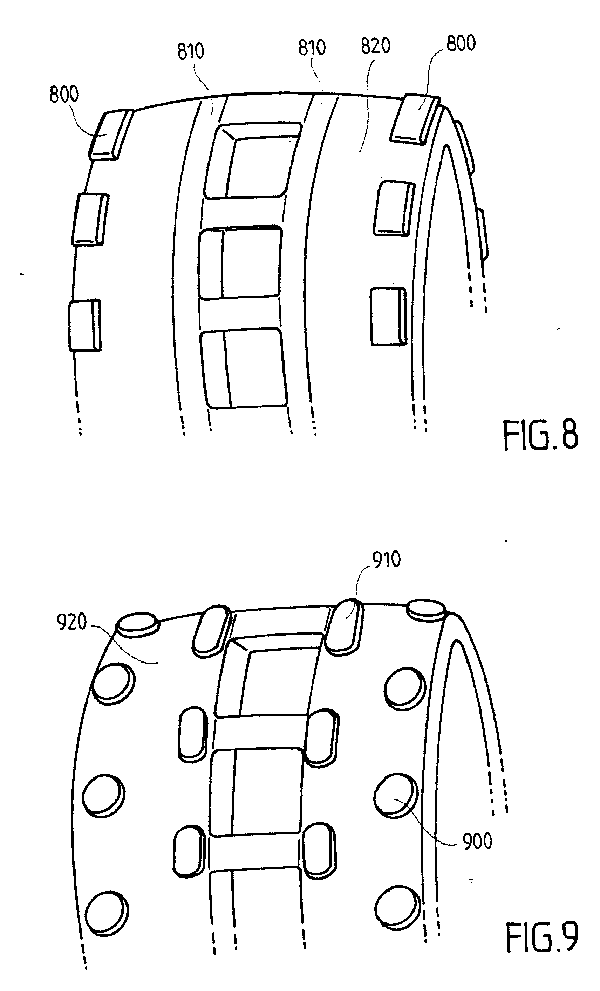

Le mode de réalisation des figures 6 et 7 (coupe VII-VII) est semblable à celui des figures 4 et 5, mais avec ajout, dans chacune des pistes de roulement, d'un canal annulaire 601,602 situé à distance du bord correspondant de la roue et dans lequel débouchent les cavités 300. Le fond du canal possède avantageusement une section droite en arc de cercle, ou similaire. Un tel canal peut aussi être prévu dans d'autres modes de réalisation, notamment celui des figures 2 et 3.

On décrira maintenant d'autres versions, où chacune des pistes de roulement est définie au moins en partie par des plots en saillie à partir d'un fond annulaire de forme cylindrique ou tronconique, formant des cavités communicantes.

Sur la figure 8, chacune des pistes de roulement est définie par des plots en saillie 800 espacés les uns des autres et situés près du bord correspondant de la roue. Une bande annulaire cylindrique 810 est prévue de préférence dans une région centrale de la roue. Pour le reste, le fond 820 de la piste de roulement, en creux, descend radialement vers l'intérieur lorsqu'on va vers le côté extérieur de la roue, comme précédemment, avec une section droite radiale de forme cylindrique ou tronconique.

Sur la figure 9, qui se compare à la figure 8, les plots 900 sont de préférence plus petits, tandis que la bande annulaire 810 est remplacée par une autre rangée de plots 910. Autrement dit, chacune des pistes de roulement est définie par une première série de plots en saillie espacés les uns des autres et situés près du bord correspondant de la roue et par une deuxième série de plots en saillie espacés les uns des autres et situés dans une région centrale de la roue (près de la piste d'entraînement).

Il est préférable de conserver les grattoirs, tels que G (figure 1). Toutefois, ceux-ci perdent de leur importance, et pourraient être supprimés dans certains cas.

Bien entendu, on peut prévoir différentes autres variantes. Par exemple, on peut ne prévoir les cavités que sur l'une des deux pistes de roulement, par exemple la piste externe par rapport au véhicule, au moins dans certains cas. Les cavités ne sont pas nécessairement régulièrement réparties sur la périphérie de la roue, pourvu qu'on en respecte les contraintes mécaniques au roulement.

Des contraintes spatiales (logement de l'entraînement par exemple) peuvent intervenir du côté de la roue qui est tourné vers le véhicule. Ainsi, l'épaisseur x1 de la périphérie de jante côté véhicule peut être plus faible que l'épaisseur x2 de la périphérie de jante côté extérieur (figures 3, 5 et 7, notamment). Dans ce cas, les cavités ne seront pas exactement les mêmes de part et d'autre. Sur la figure 5, par exemple, les lunules 303 seront plus incurvées, et plus proches du plan central de roue, du côté intérieur que du côté extérieur. Plus généralement, la ou les pistes de roulement peuvent avoir une disposition différente de celle décrite en détail. Enfin, bien que l'invention soit particulièrement intéressante pour une roue motrice du type décrit, elle peut aussi s'appliquer à une roue non motrice, qui doit garder des pistes de roulement homologues de celles des roues motrices; elle pourrait encore s'appliquer à des roues motrices de principe différent.

## Revendications

1. Roue pour chenille souple, comprenant deux pistes de roulement (36), encadrant une zone intermédiaire (50), en particulier d'entraînement, l'une au moins des pistes de roulement comportant une multiplicité de cavités (200;300;820;920) de forme choisie débouchant radialement vers l'extérieur de la roue et latéralement vers le bord de la roue, **caractérisé en ce que** ces cavités (200; 300; 820; 920) s'étendent jusqu'au bord de la roue (14) de manière à favoriser une évacuation latérale de tout matériau ou objet susceptible de se loger entre la roue et la chenille.

2. Roue selon la revendication 1, **caractérisé en ce que** les pistes de roulement (36) sont de forme cylindrique circulaire et **en ce que** les cavités (200;300) sont formées par des évidements espacés angulairement.

3. Roue selon la revendication 2, **caractérisé en ce que** les cavités (200;300) sont délimitées chacune par une paroi de fond inclinée radialement vers l'intérieur en direction du bord de la roue.

4. Roue selon l'une des revendications 2 et 3, **caractérisé en ce que** les cavités (200) ont une forme sensiblement rectangulaire.

5. Roue selon l'une des revendications 2 et 3, **caractérisé en ce que** les cavités (300) ont une forme en coquille ou similaire.

6. Roue selon l'une des revendications 2 à 5, **caractérisé en ce que** chacune des pistes de roulement (36) comporte un canal annulaire (601;602) situé à distance du bord correspondant de la roue et dans lequel débouchent les cavités.

7. Roue selon la revendication 1, **caractérisé en ce que** chacune des pistes de roulement (820;920) est définie au moins en partie par des plots (800;900,910) en saillie à partir d'un fond annulaire de forme cylindrique ou tronconique.

8. Roue selon la revendication 7, **caractérisé en ce que** chacune des pistes de roulement (820) est définie par des plots en saillie (800) espacés les uns des autres et situés près du bord correspondant de la roue et par une bande annulaire cylindrique (810) située dans une région centrale.

9. Roue selon la revendication 7, **caractérisé en ce que** chacune des pistes de roulement (920) est définie par une première série (900) de plots en saillie espacés les uns des autres et situés près du bord correspondant de la roue, et par une deuxième série (910) de plots en saillie espacés les uns des autres et situés dans une région centrale de la roue.

10. Roue selon l'une des revendications 1 à 9, **caractérisé en ce qu'**elle est réalisée en une matière métallique, avantageusement en fonte ou en aluminium.

## Patentansprüche

1. Rad, insbesondere Antriebsrad, für nachgiebige Gleiskette, mit zwei Rollbahnen (36), die eine Zwischenzone (50) einrahmen, wobei wenigstens eine der Rollbahnen eine Mehrzahl von Vertiefungen (200; 300; 820; 920) von ausgewählter Form aufweist, die radial nach außen am Rad und seitlich zum Rand des Rades münden, **dadurch gekennzeichnet, daß** diese Vertiefungen (200; 300; 820; 920) sich bis zum Rand des Rades (14) erstrecken, derart, daß sie eine seitliche Ausbringung jeglichen Materials oder Gegenstandes, das bzw. der in der Lage ist, sich zwischen Rad und Gleiskette einzufinden, unterstützen.

2. Rad nach Anspruch 1, **dadurch gekennzeichnet, daß** die Rollbahnen (36) von kreiszylindrischer Form sind, und daß die Vertiefungen (200; 300) durch winkelig beabstandete Ausnehmungen gebildet sind.

3. Rad nach Anspruch 2, **dadurch gekennzeichnet, daß** die Vertiefungen (200; 300) jeweils durch eine Bodenwand begrenzt sind, die radial nach innen in Richtung des Randes des Rades geneigt ist.

4. Rad nach Anspruch 2 oder 3, **dadurch gekennzeichnet, daß** die Vertiefungen (200) eine im wesentlichen rechteckige Form aufweisen.

5. Rad nach Anspruch 2 oder 3, **dadurch gekennzeichnet, daß** die Vertiefungen (300) eine Muschelform oder dergleichen aufweisen.

6. Rad nach einem der Ansprüche 2 bis 5, **dadurch gekennzeichnet, daß** eine jede der Rollbahnen (36) einen Ringkanal (601; 602) aufweist, der sich im Abstand zum entsprechenden Rand des Rades befindet und in den die Vertiefungen münden.

7. Rad nach Anspruch 1, **dadurch gekennzeichnet, daß** eine jede der Rollbahnen (820; 920) wenigstens teilweise aus Vorsprüngen (800; 900, 910) ausgehend von einem ringförmigen Boden in Zylinder- oder Kegelstumpfform definiert ist.

8. Rad nach Anspruch 7, **dadurch gekennzeichnet, daß** eine jede der Rollbahnen (820) durch Vorsprünge (800), die voneinander beabstandet sind und in der Nähe des zugehörigen Randes des Rades angeordnet sind und durch ein zylindrisches ringförmiges Band (810) definiert ist, das sich in einem Mittenbereich befindet.

9. Rad nach Anspruch 7, **dadurch gekennzeichnet, daß** eine jede der Rollbahnen (920) durch eine erste Reihe (900) von Vorsprüngen, die voneinander beabstandet sind und in der Nähe des entsprechenden Randes des Rades angeordnet sind, und durch eine zweite Reihe (910) von Vorsprüngen definiert ist, die voneinander beabstandet sind, und in einem Mittenabschnitt des Rades angeordnet sind.

10. Rad nach einem der Ansprüche 1 bis 9, **dadurch gekennzeichnet, daß** es aus einem metallischen Material gebildet ist, vorteilhafterweise aus Guß oder aus Aluminium.

## Claims

1. Wheel for a flexible crawler, comprising two bearing tracks (36), surrounding an intermediate zone (50), particularly for driving, at least one of the bearing tracks comprising a multiplicity of cavities (200; 300; 820; 920) of chosen form opening radially towards the outside of the wheel and laterally towards the edge of the wheel, **characterised in that** these cavities (200; 300; 820; 920) extend to the edge of the wheel (14) in such a way as to encourage the lateral evacuation of any material or object which may get lodged between the wheel and the crawler.

2. Wheel according to claim 1, **characterised in that** the bearing tracks (36) are of circular cylindrical form and **in that** the cavities (200; 300) are formed by angularly spaced hollows.

3. Wheel according to claim 2, **characterised in that** the cavities (200; 300) are each defined by a base wall radially inclined towards the inside in the direction of the edge of the wheel.

4. Wheel according to one of claims 2 and 3, **characterised in that** the cavities (200) are of substantially rectangular shape.

5. Wheel according to one of claims 2 and 3, **characterised in that** the cavities (300) are in the shape of a shell, or similar.

6. Wheel according to one of claims 2 to 5, **characterised in that** each of the bearing tracks (36) comprises an annular channel (601; 602), situated away from the corresponding edge of the wheel, in which the cavities open out.

7. Wheel according to claim 1, **characterised in that** each of the bearing tracks (820; 920) is defined at least partially by blocks (800; 900, 910) projecting from an annular cylindrical or frusto-conical base.

8. Wheel according to claim 7, **characterised in that** each of the bearing tracks (820) is defined by projecting blocks (800) spaced apart from each other and situated near the corresponding edge of the wheel and by a centrally situated, cylindrical, annular strip (810).

9. Wheel according to claim 7, **characterised in that** each of the bearing tracks (920) is defined by a first series (900) of projecting blocks spaced apart from each other and situated near the corresponding edge of the wheel, and by a second series (910) of projecting blocks spaced apart from each other and situated in a central area of the wheel.

10. Wheel according to one of claims 1 to 9, **characterised in that** it is made from a metal material, preferably cast iron or aluminium.
